# EUROPÄISCHE PATENTSCHRIFT

(11) **EP 1 261 513 B1**
(45) Veröffentlichungstag und Bekanntmachung des Hinweises auf die Patenterteilung: **01.12.2004**
(21) Anmeldenummer: 00976069.5
(22) Anmeldetag: 24.11.2000
(51) Int. Cl.: B60T 8/36, B60T 17/02, F04B 1/04

(54) **HYDRAULIKAGGREGAT**
HYDRAULIC UNIT
UNITE HYDRAULIQUE

(30) Priorität: 01.12.1999 DE 19957923; 31.05.2000 DE 10027172
(43) Veröffentlichungstag der Anmeldung: 04.12.2002
(73) Patentinhaber: Continental Teves AG & Co. oHG, 60488 Frankfurt (DE)
(72) Erfinder: BECK, Erhard, 35781 Weilburg (DE)
(86) Internationale Anmeldenummer: PCT/EP2000/011701
(87) Internationale Veröffentlichungsnummer: WO 2001/040042

(56) Entgegenhaltungen:
- DE-A- 19 643 289
- DE-A- 19 648 319
- DE-A- 19 712 209
- DE-A- 19 851 762

## Beschreibung

Die Erfindung betrifft ein Hydraulikaggregat, insbesondere für schlupfgeregelte Kraftfahrzeugbremsanlagen, nach dem Oberbegriff des Anspruchs 1.

Aus der DE 44 38 163 A1 ist bereits ein Hydraulikaggregat der angegebenen Art bekannt geworden. Bei diesem Hydraulikaggregat bedarf es zur Anordnung in einem Kraftfahrzeug besonderer Maßnahmen, um die Spezifikationen zur Funktionstüchtigkeit der Anlage, beispielsweise einem Salzsprühtest, und damit den späteren alltäglichen Anforderungen im Betrieb an Salz- und Spritzwasserunempfindlichkeit gerecht zu werden.

Ein gemeinsames Ventilationssystem sorgt dafür, dass die Beund Entlüftung der Hohlräume im Hydraulikaggregat zum Druckausgleich mit Atmosphäre ausschließlich über eine einzige Belüftungsstelle erfolgt, die mit einem Druckausgleichkanal des Ventilationssystems in Verbindung steht. Diese Belüftungsstelle weist einen gasdurchlässigen, jedoch für die Flüssigkeit und für Festkörperpartikel undurchlässigen Wandabschnitt auf.

Alternativ dazu kann die Belüftungsstelle mit einem Rückschlagventil versehen sein, das die Hohlräume gegenüber dem Eindringen von Feuchtigkeit schützt.

Der flüssigkeitsundurchlässige Wandabschnitt verhindert jedoch den Ablauf von Leckageflüssigkeit der Pumpe, die sich zunächst im Kurbelraum der Pumpe ansammeln kann und die in den Elektromotor und damit in dem vorliegenden Ausführungsbeispiel auch in Richtung der übrigen, über das Ventilationssystem verbundenen Funktionselementen des Hydraulikaggregats zurückstauen kann, so dass bereits geringe Mengen von Leckageflüssigkeit im Elektromotor zu Betriebsstörungen des Hydraulikaggregats führen können.

Daher ist es die Aufgabe der vorliegenden Erfindung, ein Hydraulikaggregat der angegebenen Art derart zu verbessern, dass Leckageflüssigkeit der Pumpe sicher aus dem Kurbelraum ins Freie abgeleitet werden kann, ohne den Luftaustausch und damit die Belüftung des Hydraulikaggregats zu behindern.

Diese Aufgabe wird erfindungsgemäß für ein Hydraulikaggregat der eingangs genannten Art durch die kennzeichnenden Merkmale des Patentanspruchs 1 gelöst.

Weitere Merkmale, Vorteile und Anwendungsmöglichkeiten der vorliegenden Erfindung ergeben sich aus der nachfolgenden Beschreibung eines Ausführungsbeispiels anhand zweier Zeichnungen.

Es zeigen:
- Fig. 1: eine Ausführungsform eines Hydraulikaggregats, mit einem zwischen dem Aufnahmekörper und einer Abdekkungseinheit angeordneten Druckausgleichskanal,
- Fig. 2: eine vorteilhafte Ausgestaltung des Druckausgleichkanals in Form eines mit Einlass- und Auslassventilen versehenen Rohrstücks.

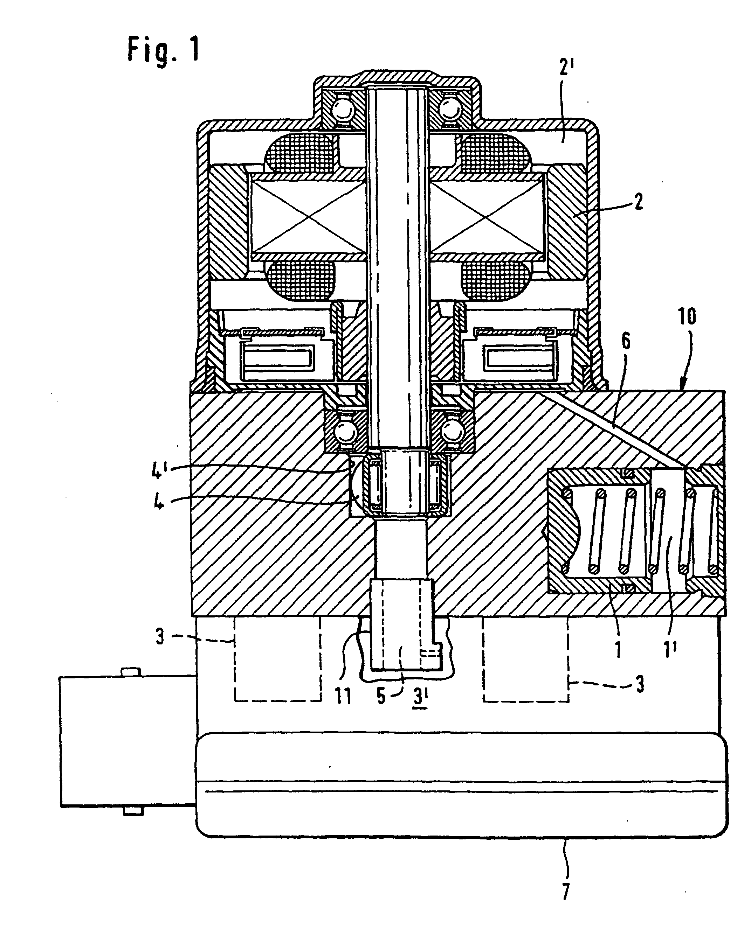

Die Fig. 1 zeigt ein Hydraulikaggregat mit einem im Schnitt dargestellten Aufnahmekörper 10 zur Anordnung des Elektromotors 2, mehrerer Ventilelemente 3 und eines Speicherelementes 1. Der Elektromotor 2 ist als Gleichstrommotor ausgeführt, dessen Rotor an einem Wellenende in einem topfförmigen Gehäuse gelagert ist und dessen weiteres Lager in einer Sackbohrung des Aufnahmekörpers 10 geführt ist. Dieses Lager führt die Welle des Elektromotors 2 in Nähe des in einem sog. Kurbelraum 4' reichenden Wellenexzenterzapfens, der zur Betätigung einer mit Radialkolben versehenen Pumpe 4 ein Nadellager aufweist. Ein weiterer, im Durchmesser verkleinerter Bohrungsabschnitt schließt sich der Lagerstelle des Elektromotors 2 im Aufnahmekörper 10 an. Diesem Bohrungsabschnitt folgt der Druckausgleichskanal 5 in Richtung zur Oberfläche des Aufnahmekörpers 10. Auf dieser Stirnfläche des Aufnahmekörpers 10 befindet sich eine Abdeckungseinheit 7, die Ventilelemente 3 atmungsaktiv umschließt. Zur Aufnahme von elektrischen bzw. elektronischen Komponenten kann der Hohlraum 3' unterteilt sein. In Querlage zum Elektromotor 2 ist das Speicherelement 1 im Aufnahmekörper 10 beweglich ausgerichtet. Der zwischen dem kolbenförmigen Speicherelement 1 und dem Verschlussdeckel angeordnete Hohlraum 1' steht beispielhaft über einen Druckausgleichskanal 6 mit dem Hohlraum 2' des Elektromotors 2 in Verbindung. Hierzu weist die Bürstenplatte des Antriebselementes 2 entsprechende Durchbrüche auf, die eine offene Verbindung zwischen dem Hohlraum 1' und dem Hohlraum 2' herstellen, wobei der Hohlraum 2' des Elektromotors 2 vorzugsweise über die Spielpassung der Bürstenplatte auf der Antriebswelle und den Abständen zwischen den Lagerkugeln einen druckausgleichenden Verbindungspfad in Richtung des Kurbelraums 4' aufweist, dem sich schließlich als einzige zentrale Belüftungsstelle der eingangs erwähnte Druckausgleichkanal 5 anschließt. Damit ist ausschließlich über die zwischen dem Aufnahmekörper 10 und der Abdeckungseinheit 7 vorhandene Belüftungsstelle eine die Hohlräume im Hydraulikaggregat mit der Atmosphäre verbindende offene Stelle vorhanden, die auch Leckageflüssigkeit der Pumpe 4 sicher aus dem Kurbelraum 4' in die Abdekkungseinheit 7 ausfließen lässt, um auf jeden Fall eine Verschmutzung des Elektromotors 2 zu verhindern.

Etwaige Druckänderungen im Betrieb des Hydraulikaggregates, die insbesondere durch die Bewegung des Speicherelements 1 den Hohlraum 1' als Expansions- und Kompressionsraum wirken lassen, werden damit ausschließlich innerhalb eines geschlossenen Ventilationskreislaufes übertragen, wobei die durch Rotation erzeugten Ventilationsströme im Hohlraum 2' den Druckänderungen des Speicherelementes 1 untergeordnet sind. Gleichfalls ist die durch Rotation des Elektromotors 2 hervorgerufene Luftströmung infolge ihres gleichbleibenden Verlaufs von untergeordneter Bedeutung, so dass die Be- und Entlüftung und damit die Ventilation im Hydraulikaggregat im wesentlichen durch die diskontinuierliche Arbeitsweise des Speicherelementes 1 und der Kolbenoszillation der Pumpe 4 bestimmt wird.

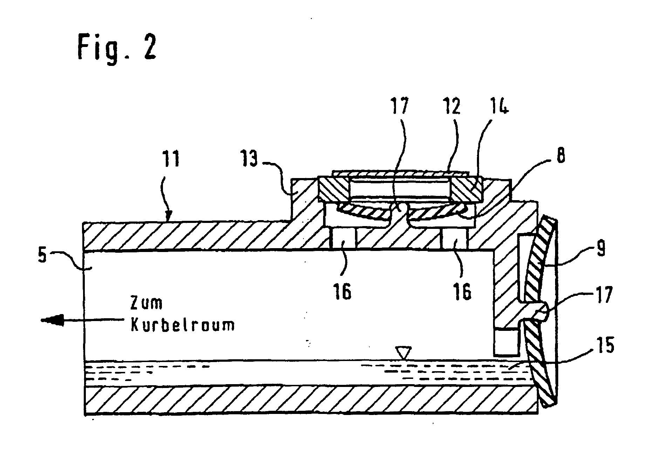

Die Figur 2 zeigt in einer vergrößerten Darstellung die erfindungsgemäße Ausgestaltung des Druckausgleichskanals 5, der zuvor bereits anhand der Fig. 1 aufgezeigt wurde. Erfindungsgemäß weist der Druckausgleichskanal 5 Ein- und Auslassventile 8, 9 auf, die voneinander unabhängig und in unterschiedlichen Schließ- und Öffnungsrichtungen an den Ein-und Auslasskanälen 16, 15 angeschlossenen zu betätigen sind und die in ihrer Grundstellung geschlossen verharren. Die Einlass- und Auslassventile 8,9 sind derart gewählt, dass sie bereits mittels einer geringen Druckdifferenz geöffnet werden können. Um die Ein- und Auslassventile 8,9 funktionsgerecht im Bereich des Druckausgleichskanals 5 integrieren zu können, sind diese am Rohrstück 11 verkörpert, so dass dieses Rohrstück 11 die Einlass- und Auslassventile 8,9 trägt. Das Rohrstück 11 bildet somit mit den Einlass- und Auslassventilen 8,9 eine eigenständig handhabbare Unterbaugruppe, die somit als Verlängerung des Druckausgleichskanals 5 aus dem den Elektromotor 2 tragenden Aufnahmekörper 10 hervorsteht. Die Einlass- und Auslassventile 8,9 können als Membran-, Platten- oder Kugelrückschlagventile ausgeführt werden. In vorliegendem Ausführungsbeispiel wurde zur Gewährleistung einer möglichst kleinen Bauform eine Konstruktion bestehend aus der Membran- und Plattenbauform gewählt, die ein besonders günstiges Ansprechverhalten bei gleichzeitig guter Dichtwirkung ermöglicht. Konstruktiv werden deshalb die Einlass- und Auslassventile 8,9 durch Ventilgummis dargestellt, die in ihrer Mitte an einem Zapfen 17 des Rohrstücks 11 verankert sind und mit ihrem Außenumfang jeweils einen Dichtsitz mit Vorsprüngen (Rahmen 13) am Rohrstück 11 bilden. Das Einlassventil 8 ist hierzu an der Mantelfläche des Rohrstücks 11 angeordnet und das Auslassventil 9 befindet sich an der vom Kurbelraum 4' abgewandten Stirnfläche des Rohrstücks 11. Ferner wird das Einlassventil 8 von einem gasdurchlässigen, jedoch festkörper- und flüssigkeitsundurchlässigen Element 12 überdeckt, das in einem das Einlassventil 8 aufnehmenden Rahmen 13 eingesetzt ist, der zur Integration des Einlassventils 8 einen entsprechenden Überstand am Rohrstück 11 aufweist. Hierdurch liegt der nach innen gewölbte Ventilkörper des Einlassventils 8 mit seinem Außenumfang in der geschlossenen Grundstellung an einer als Ventilsitz 14 wirksamen Innenstirnfläche des gasdurchlässigen Elements 12 an. Diese gewählte Konstruktion hat den Vorteil, dass sich eine aus dem Kurbelraum 4' kommende Pumpenleckage abbildungsgemäß vor dem Auslassventil 9 ansammeln und damit zunächst zwischengespeichert werden kann, da das Einlassventil 8 und das Element 12 nach außen grundsätzlich sperrend wirken, so dass bis zum Erreichen des Öffnungsdrucks des Auslassventils 9 ein Flüssigkeitsaustritt über das Auslassventil 9 verhindert ist. Erst eine Erwärmung, beispielsweise durch ein Aufheizen des Hydraulikaggregats durch die Motorraumwärme in einem Kraftfahrzeug, wird im Rohrstück 11 der Öffnungsdruck am Auslassventil 9 erreicht, so dass sowohl erwärmte Luft als auch die Leckageflüssigkeit ins Freie abgeblasen werden können, wozu sich die Dichtlippe des Auslassventils 9 von der rahmenförmigen Stirnfläche des Rohrstücks 11 abhebt und den Auslasskanal 15 im Rohrstück 11 freigibt. Ein Öffnen des Auslassventils 9 kann sich ebenso durch den Betrieb des Elektromotors 2 einstellen, da sich der Rotor und mit ihm die darin befindliche Luft erwärmt, was gleichfalls zu einem geringen Überdruck im Rohrstück 11 führt, so dass in jedem Fall ein Druckausgleich über das Auslassventil 9 erfolgt, unabhängig davon, ob das Rohrstück 11 mit Leckageflüssigkeit gefüllt ist.

Sobald sich das Hydraulikaggregat abkühlt, entsteht innerhalb des Rohrstücks 11 ein Druckgefälle, das einerseits durch den auf die Außenfläche des Auslassventils 9 wirksamen Atmosphärendruck zu einer verstärkten Dichtwirkung des Auslassventils 9 führt, andererseits wird durch die gewählte Anordnung des Einlassventils 8 eine Sogwirkung auf das Einlassventil 8 ausgeübt, die zum Abheben der Dichtlippe des Einlassventils 8 vom Ventilsitz 14 am Element 12 führt, wodurch Luft aus der Atmosphäre über das Element 12, das Einlassventil 8 und die Einlasskanäle 16 in Richtung des Rohrstückes 11 strömt, bis sich ein Druckausgleich im Rohrstück 11 einstellt. Das ausschließlich gasdurchlässige Element 12 kann beispielhaft durch eine Goretex-Membran oder ein feinmaschiges Sieb realisiert werden.

Damit ist sichergestellt, dass das Hydraulikaggregat einerseits tauchfähig ist, ohne Kompromisse hinsichtlich des Druckausgleichs und der Abfuhr von Pumpenleckage eingehen zu müssen.
Die erfindungsgemäße Ausbildung des Druckausgleichkanals 5 ist damit prinzipiell als differenzdruckaktivierte Flüssigkeitspumpe zu verstehen, die anhand von Druckunterschieden, wie sie sich beim Aufheizen und Abkühlen des Hydraulikaggregates ergeben, die Leckageflüssigkeit der Pumpe ins Freie abpumpt. Das Eintauchen eines erwärmten Hydraulikaggregats in kaltes Wasser führt zwangsläufig dazu, dass zunächst infolge des Druckgefälles im Rohrstück 11 das Einlassventil 8 öffnet, um infolge des Abkühlvorganges noch Luft in das Rohrstück 11 einströmen zu lassen, bis der Wasserpegel außerhalb des Rohrstücks 11 das flüssigkeitsundurchlässige Element 12 erreicht. Danach ist der Druckausgleich unterbrochen und es kann kein Wasser in das Rohrstück 11 und damit in Richtung des Kurbelraums 4' gelangen. Befindet sich das Hydraulikaggregat wieder oberhalb des Wasserpegels, dann kann das Wasser von dem Element 12 abtropfen bzw. abdunsten und der Luftaustausch über das Einlassventil 8 ist wieder möglich.

Durch die gewählte Konstruktion sind somit Folgeschäden, z.B. durch Korrosion von Bauteilen oder Kurzschlüssen von spannungsführenden Elementen innerhalb des Hydraulikaggregats ausgeschlossen.

Bezugszeichenliste
- 1: Speicherelement
- 1': Hohlraum
- 2: Elektromotor
- 2': Hohlraum
- 3: Ventilelement
- 3': Hohlraum
- 4: Pumpe
- 4': Kurbelraum
- 5: Druckausgleichskanal
- 6,6': Druckausgleichskanal
- 7: Abdeckungseinheit
- 8: Einlassventil
- 9: Auslassventil
- 10: Aufnahmekörper
- 11: Rohrstück
- 12: Element
- 13: Rahmen
- 14: Ventilsitz
- 15: Einlasskanal
- 16: Auslasskanal
- 17: Zapfen

## Patentansprüche

1. Hydraulikaggregat, insbesondere für schlupfgeregelte Kraftfahrzeug-Bremsanlagen, mit einer Pumpe (4) und einem Elektromotor (2) zum Antrieb der Pumpe (4), wobei sich der Antrieb des Elektromotors in einen Kurbelraum (4) der Pumpe erstreckt sowie mit einer Be- und Entlüftung des Kurbelraums (4') zum Druckausgleich mit der Atmosphäre mittels eines Druckausgleichkanals (5), **dadurch gekennzeichnet, dass** der Druckausgleichskanal (5) über in Grundstellung geschlossene, differenzdruckabhängige Ein- und Auslassventile (8,9) mit der Atmosphäre verbindbar ist.

2. Hydraulikaggregat nach Anspruch 1, **dadurch gekennzeichnet, dass** der Druckausgleichskanal (5) zumindest teilweise durch ein Rohrstück (11) hindurch geführt ist, das die Einlass- und Auslassventile (8,9) aufnimmt.

3. Hydraulikaggregat nach Anspruch 2, **dadurch gekennzeichnet, dass** das Rohrstück (11) mit den Einlass- und Auslassventilen (8,9) eine eigenständig handhabbare Unterbaugruppe bildet, die sich als Verlängerung des Druckausgleichskanals (5) aus einem einen Elektromotor (2) tragenden Aufnahmekörper (10) hervorsteht.

4. Hydraulikaggregat nach einem der vorhergehenden Ansprüche 1 bis **3, dadurch gekennzeichnet, dass** die Einlassund Auslassventile (8,9) als Platten- oder Kugelrückschlagventile ausgeführt sind.

5. Hydraulikaggregat nach einem der vorhergehenden Ansprüche, **dadurch gekennzeichnet, dass** das Einlassventil (8) an der Mantelfläche des Rohrstücks (11) und dass das Auslassventil (9) an der vom Kurbelraum (4') abgewandten Stirnfläche des Rohrstücks (11) angeordnet ist.

6. Hydraulikaggregat nach einem der vorhergehenden Ansprüche 2 bis 5, **dadurch gekennzeichnet, dass** das Einlassventil (8) von einer gasdurchlässigen, jedoch festkörper- und flüssigkeitsundurchlässigen Element (12) überdeckt ist, das an einem das Einlassventil (8) aufnehmenden Rahmen (13) gehalten ist, der das Einlassventil (8) aufweist.

7. Hydraulikaggregat nach Anspruch 6, **dadurch gekennzeichnet, dass** das Einlassventil (8) in der geschlossenen Grundstellung an einer als Ventilsitz (14) wirksamen Stirnfläche des gasdurchlässigen Elements (12) anliegt.

## Claims

1. Hydraulic unit, in particular for slip-controlled automotive vehicle brake systems, including a pump (4) and an electric motor (2) for driving the pump (4), wherein the drive of the electric motor extends into a crank chamber (4') of the pump, and including ventilation and venting of the crank chamber (4') for the purpose of pressure compensation relative to the atmosphere by means of a pressure compensation channel (5),
**characterized in that** the pressure compensation channel (5) is connectable to the atmosphere by way of inlet and outlet valves (8, 9) which are closed in their basic position and dependent on the pressure differential.

2. Hydraulic unit as claimed in claim 1,
**characterized in that** the pressure compensation channel (5) extends at least in part through a pipe member (11) which accommodates the inlet and outlet valves (8, 9).

3. Hydraulic unit as claimed in claim 2,
**characterized in that** the pipe member (11) along with the inlet and outlet valves (8, 9) forms an independently operable subassembly which, as an extension of the pressure compensation channel (5), projects from an accommodating member (10) that carries an electric motor (2).

4. Hydraulic unit as claimed in any one of the preceding claims 1 to 3,
**characterized in that** the inlet and outlet valves (8, 9) are configured as plate-type or ball-type non-return valves.

5. Hydraulic unit as claimed in any one of the preceding claims,
**characterized in that** the inlet valve (8) is arranged on the peripheral surface of the pipe member (11), and **in that** the outlet valve (9) is arranged on the end surface of the pipe member (11) remote from the crank chamber (4').

6. Hydraulic unit as claimed in any one of the preceding claims 2 to 5,
**characterized in that** the inlet valve (8) is covered by an element (12) which is permeable to gas, but impermeable to solid particles and fluid, the said element being retained on a frame (13) that accommodates the inlet valve (8).

7. Hydraulic unit as claimed in claim 6,
**characterized in that** the inlet valve (8) in its closed initial position bears against an end surface of the gas-permeable element (12) that acts as a valve seat (14).

## Revendications

1. Groupe hydraulique, en particulier pour systèmes de freinage de véhicule automobile à régulation du glissement, comportant une pompe (4) et un moteur électrique (2) pour l'entraînement de la pompe (4), le dispositif d'entraînement du moteur électrique s'étendant dans un carter-moteur (4') de la pompe, et comportant une arrivée d'air et purge d'air du carter-moteur (4') pour l'équilibrage de la pression avec l'atmosphère au moyen d'un canal d'équilibrage de pression (5), **caractérisé en ce que** le canal d'équilibrage de la pression (5) peut être relié à l'atmosphère par des soupapes d'admission et soupapes d'échappement (8, 9) fermées en position de base, dépendant de la pression différentielle.

2. Groupe hydraulique selon la revendication 1, **caractérisé en ce que** le canal d'équilibrage de la pression (5) passe au moins en partie à travers une pièce tubulaire (11) qui reçoit les soupapes d'admission et soupapes d'échappement (8, 9).

3. Groupe hydraulique selon la revendication 2, **caractérisé en ce que** la pièce tubulaire (11) avec les soupapes d'admission et soupapes d'échappement (8, 9) forme un sous-groupe pouvant être manipulé de manière indépendante qui ressort, en tant que prolongement du canal d'équilibrage de la pression (5), d'un corps de réception (10) portant un moteur électrique (2).

4. Groupe hydraulique selon l'une des revendications 1 à 3 précédentes, **caractérisé en ce que** les soupapes d'admission et soupapes d'échappement (8, 9) sont réalisées en tant que clapets de non-retour à plaque ou à bille.

5. Groupe hydraulique selon l'une des revendications précédentes, **caractérisé en ce que** la soupape d'admission (8) est disposée sur la surface d'enveloppe de la pièce tubulaire (11) et **en ce que** la soupape d'échappement (9) est disposée sur la face frontale, tournée à l'opposé du carter-moteur (4'), de la pièce tubulaire (11).

6. Groupe hydraulique selon l'une des revendications 2 à 5 précédentes, **caractérisé en ce que** la soupape d'admission (8) est recouverte par un élément (12) perméable aux gaz, mais imperméable aux solides et aux liquides, lequel est maintenu sur un cadre (13), recevant la soupape d'admission (8), qui comporte la soupape d'admission (8).

7. Groupe hydraulique selon la revendication 6, **caractérisé en ce que** la soupape d'admission (8) en position de base fermée s'applique contre une face frontale, servant de siège de soupape (14), de l'élément (12) perméable aux gaz.
